# EUROPÄISCHE PATENTSCHRIFT

(11) **EP 2 674 731 B1**
(45) Veröffentlichungstag und Bekanntmachung des Hinweises auf die Patenterteilung: **02.09.2015**
(21) Anmeldenummer: 12171783.9
(22) Anmeldetag: 13.06.2012
(51) Int. Cl.: G01D 5/347

(54) **Positionsmesseinrichtung**
Position measuring device
Dispositif de mesure de position

(43) Veröffentlichungstag der Anmeldung: 18.12.2013
(73) Patentinhaber: Dr. Johannes Heidenhain GmbH, 83301 Traunreut (DE)
(72) Erfinder: Oberhauser, Johann, 83377 Vachendorf (DE); Tovar, Heinz, 83313 Siegsdorf (DE)

(56) Entgegenhaltungen:
- EP-A1- 0 503 716
- EP-A1- 1 770 375
- DE-A1-102006 010 161
- DE-A1-102008 053 977

## Beschreibung

Die Erfindung betrifft eine Positionsmesseinrichtung zur Bestimmung der absoluten Position.

Auf vielen Gebieten werden vermehrt absolute Positionsmesseinrichtungen eingesetzt, bei denen die absolute Positionsinformation aus einer Codespur mit in Messrichtung hintereinander angeordneten Codeelementen abgeleitet wird. Die Codeelemente sind dabei in pseudozufälliger Verteilung vorgesehen, so dass eine bestimmte Anzahl von aufeinander folgenden Codeelementen jeweils ein Bitmuster bildet. Bei der Verschiebung der Abtasteinrichtung gegenüber der Codespur um ein einziges Codeelement wird bereits ein neues Bitmuster gebildet und über den gesamten absolut zu erfassenden Messbereich steht eine Folge von unterschiedlichen Bitmustern zur Verfügung.

Ein derartiger sequentieller Code wird als Kettencode oder als Pseudo-Random-Code (PRC) bezeichnet.

Eine Positionsmesseinrichtung mit einem Pseudo-Random-Code ist beispielsweise in der DE 102006010161 A1 erläutert. Es sind mehrere parallel zueinander verlaufende Codespuren vorgesehen, welche jeweils die gleiche Folge von Codeelementen aufweisen. Durch Abtastung einer dieser Codespuren wird die absolute Position in einer Messrichtung bestimmt und durch Abtastung einer weiteren Codespur wird die absolute Position in einer zur ersten Richtung senkrechten zweiten Richtung bestimmt.

Eine absolute Positionsmesseinrichtung, von der diese Erfindung ausgeht, ist in der EP 1 468 254 B1 beschrieben. Die Positionsmesseinrichtung weist einen Code auf, der aus einer Folge von in Messrichtung hintereinander angeordneten Codeelementen besteht, wobei jedes Codeelement wiederum jeweils aus zwei Teilbereichen besteht, die zueinander komplementär sind und in Messrichtung aufeinander folgend angeordnet sind. Dieser Code wird von einer Abtasteinrichtung mit mehreren Detektoren abgetastet. In einer Auswerteeinheit wird jeweils aus den Abtastsignalen der Teilbereiche eines Codeelementes ein Vergleichsergebnis gebildet und es wird geprüft, ob das Vergleichsergebnis oberhalb oder unterhalb eines Referenzwertes liegt und abhängig davon wird für das entsprechende Codeelement als Codeinformation ein Bit "0" oder "1" abgeleitet.

Der Erfindung liegt die Aufgabe zugrunde, eine absolute Positionsmesseinrichtung zu schaffen, die einen kompakten Aufbau ermöglicht und mit der eine korrekte absolute Position mit hoher Zuverlässigkeit erzeugbar ist.

Diese Aufgabe wird durch die Merkmale des Anspruches 1 gelöst. Demnach umfasst die Positionsmesseinrichtung
- einen Codeträger mit einer Folge von Codeelementen, wobei jedes Codeelement aus zwei Teilbereichen mit zueinander komplementären Eigenschaften besteht, die in Messrichtung X aufeinanderfolgend angeordnet sind;
- eine Abtasteinrichtung mit mehreren Detektoren zur Abtastung der jeweils ein Codewort definierenden Codeelemente und zur Bildung zumindest eines Abtastsignals innerhalb jeweils eines der Teilbereiche der Codeelemente;
- eine Auswerteeinheit, ausgebildet zur Bildung einer Codeinformation für jedes der Codeelemente aus den Abtastsignalen und zur Bildung des Codewortes aus den Codeinformationen, wobei
- die Codeelemente in einer ersten Codespur und einer parallel dazu verlaufenden zweiten Codespur angeordnet sind, die jeweils die gleiche Folge von Codeelementen aufweisen, und
   die Auswerteeinheit (4) das Codewort (W1 - W16) bildet, welches die absolute Position in Messrichtung (X) eindeutig definiert, indem das Codewort (W1 - W16) aus N Codeinformationen (B1, B2) von aufeinanderfolgenden Codeelementen (C1 - C16) der ersten Codespur (11) und aus K Codeinformationen (B3, B4) von aufeinanderfolgenden Codeelementen (C1 - C16) der zweiten Codespur (12) zusammengesetzt wird, mit N und K größer 1.

Die zwei Teilbereiche eines Codeelementes sind in Messrichtung X aufeinanderfolgend angeordnet und weisen in Messrichtung jeweils gleiche Breiten auf.

Die Ausgestaltung der Codeelemente wird in bekannter Weise abhängig vom Abtastprinzip gewählt. So können die Codeelemente optisch, magnetisch, kapazitiv oder induktiv abtastbar ausgestaltet sein. Entsprechend der Ausgestaltung der Codeelemente werden auch die Detektoren gewählt.

Eine erste besonders vorteilhafte Ausgestaltung der Erfindung ist, dass die Abfolge der Codeelemente der zweiten Codespur gegenüber der Abfolge der Codeelemente der ersten Codespur in Messrichtung X derart verschoben am Codeträger angeordnet ist, dass sich die das Codewort bildenden Codeelemente der ersten Codespur und der zweiten Codespur zumindest teilweise überlappen.

Dabei ist es besonders vorteilhaft, wenn die Verschiebung V = N/2 + K/2 Codeelemente beträgt. Dadurch ist gewährleistet, dass sich die das Codewort bildenden Codeelemente der einen Spur mit den das Codewort bildenden Codeelementen der anderen Spur maximal überlappen. Durch diese Maßnahme ist das optische Abtastprinzip besonders vorteilhaft einsetzbar. Es können nämlich die Codespuren von einem gemeinsamen Abtaststrahlenbündel beleuchtet werden, das von einer Beleuchtungseinheit ausgeht. Zur optischen Abtastung weisen die zwei Teilbereiche eines Codeelementes zueinander komplementäre optische Eigenschaften auf, sie sind opak und transparent für Durchlicht-Abtastung oder reflektierend und nicht reflektierend für Auflicht-Abtastung. Durch die zueinander verschobene Anordnung der gleichen Codesequenz in mehreren Codespuren ist eine homogene Ausleuchtung der abzutastenden Codeelemente der mehreren Codespuren mit dem gemeinsamen Abtaststrahlenbündel realisierbar.

Eine zweite besonders vorteilhafte Ausgestaltung der Erfindung ist, dass die zweite Codespur nicht nur genutzt wird, um Abtastsignale von weiteren Codeelementen abzuleiten, sondern sie wird auch dazu genutzt, um redundante Abtastsignale zu generieren, die auch durch Abtastung der ersten Codespur gewonnen werden. Hierzu ist zumindest einem Codeelement der Folge in der zweiten Codespur ein Detektor zur Bildung eines redundanten Abtastsignals zugeordnet, dem auch in der ersten Codespur ein Detektor zur Bildung eines Abtastsignals zugeordnet ist. Die damit aus der ersten Codespur sowie aus der zweiten Codespur auf einfache Weise gewonnenen redundanten Abtastsignale sind der Auswerteeinheit zugeführt.

Vorteilhaft ist, wenn die Auswerteeinheit Vergleichseinrichtungen umfasst, denen je zwei Abtastsignale von Detektoren zugeführt sind, die in Messrichtung den gleichen Abstand aufweisen wie zwei in Messrichtung aufeinanderfolgend angeordnete Teilbereiche, und dass die Vergleichseinrichtungen jeweils dazu ausgebildet sind durch Vergleich der zugeführten Abtastsignale die Codeinformation zu generieren.

Besonders vorteilhaft ist, wenn mehrere Detektoren innerhalb eines Teilbereiches eines Codeelementes angeordnet sind. Dadurch ist sichergestellt, dass zumindest von einem dieser mehreren Detektoren ein eindeutiges Abtastsignal für diesen Teilbereich erzeugbar ist und somit eine sichere Codeinformation daraus ableitbar ist.

Einen vorteilhaften und einfachen Aufbau erhält man, wenn die Detektoren in Messrichtung in Abständen entsprechend der halben Länge eines Teilbereiches angeordnet sind.

Weitere vorteilhafte Ausgestaltungen der Erfindung sind in den abhängigen Ansprüchen angegeben.

Die Erfindung wird anhand der Zeichnungen näher erläutert, dabei zeigen:

| | |
|---|---|
| Figur 1 | eine Positionsmesseinrichtung in schematischer Darstellung; |
| Figur 2 | den Codeträger der Positionsmesseinrichtung gemäß Figur 1; |
| Figur 3 | einen Ausschnitt des Codes der Positionsmesseinrichtung mit Details der Auswerteeinheit, und |
| Figur 4 | eine weitere vorteilhafte Anordnung von Detektorelementen zur Abtastung eines Codeträgers. |

Die erfindungsgemäße absolute Positionsmesseinrichtung kann zur Messung von linearen oder rotatorischen Bewegungen eingesetzt werden, wobei ein Codeträger 1 dabei an einem der zu messenden Objekte und eine Abtasteinrichtung 2 am anderen der zu messenden Objekte angebracht ist. Die zu messenden Objekte können dabei der Tisch und der Schlitten einer Werkzeugmaschine, einer Koordinatenmessmaschine oder der Rotor und der Stator eines Elektromotors sein.

Die Erfindung ist besonders vorteilhaft zur Messung von rotatorischen Bewegungen einsetzbar, weshalb sie nachfolgend anhand einer Winkelmesseinrichtung näher erläutert wird.

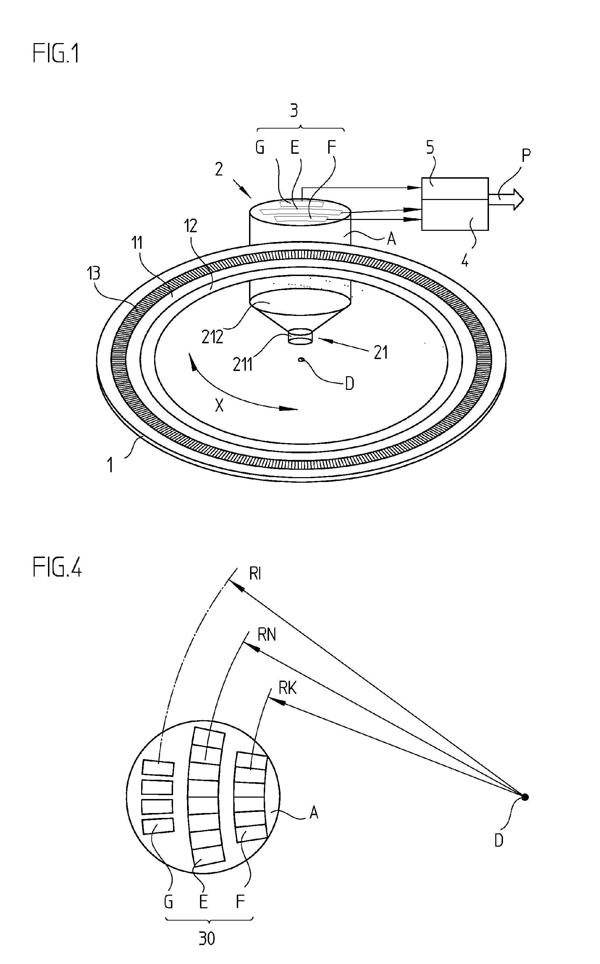

Figur 1 zeigt diese Positionsmesseinrichtung schematisch. Sie umfasst den Codeträger 1, der von der Abtasteinrichtung 2 abtastbar ist. Zur Messung von Rotationsbewegungen des Codeträgers 1 relativ zur Abtasteinrichtung 2 ist dieser um eine Drehachse D in Messrichtung X drehbar gelagert.

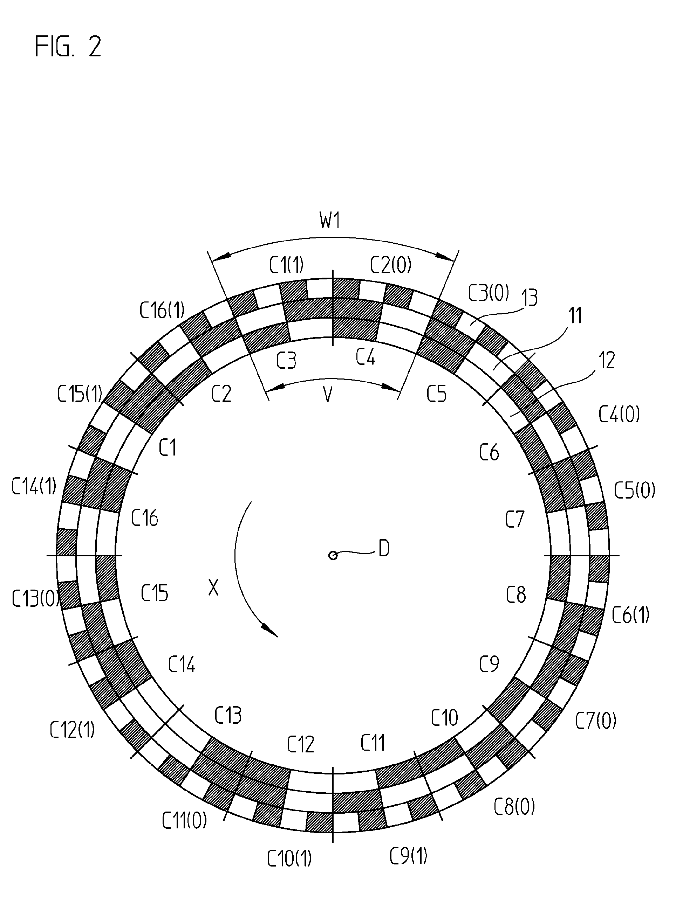

Der Codeträger 1 weist zumindest zwei parallel zueinander und kreisringförmig verlaufende Codespuren 11, 12 auf, deren Ausgestaltung später anhand der Figur 2 erläutert wird. Im dargestellten Beispiel ist zusätzlich noch eine periodische Inkrementalspur 13 am Codeträger 1 vorgesehen.

Die Codespuren 11, 12 und die Inkrementalspur 13 werden im Beispiel von der Abtasteinrichtung 2 lichtelektrisch abgetastet. Hierzu umfasst die Abtasteinrichtung 2 eine Beleuchtungseinheit 21, bestehend aus einer Lichtquelle 211 und einer Optik 212. Die Beleuchtungseinheit 21 bildet ein Abtaststrahlenbündel A zur gemeinsamen Abtastung der beiden Codespuren 11, 12 und der Inkrementalspur 13. Das Abtaststrahlenbündel A wird von den Codespuren 11, 12 und von der Inkrementalspur 13 positionsabhängig moduliert und modulierte Lichtbündel gelangen auf eine Detektoreinheit 3, die in Figur 1 nur schematisch dargestellt ist.

Die Detektoreinheit 3 weist Detektoren E zur Abtastung der ersten Codespur 11 sowie Detektoren F zur Abtastung der zweiten Codespur 12 auf. Die Abtastsignale dieser Detektoren E, F werden einer Auswerteeinheit 4 zugeführt, welche daraus eine eindeutige Absolutposition innerhalb einer Umdrehung des Codeträgers 1 in Form eines Codewortes W bildet.

Parallel neben den Codespuren 11, 12 ist eine Inkrementalspur 13 mit einer periodischen Teilung angeordnet. Die Inkrementalspur 13 wird in bekannter Weise von zumindest zwei um ¼ Teilungsperiode in Messrichtung X gegeneinander versetzten Detektoren G zur Erzeugung von um 90° gegeneinander phasenverschobener analoger Abtastsignale abgetastet. Diese analogen Abtastsignale werden in bekannter Weise in einer Einheit 5 interpoliert und der interpolierte Positionswert wird mit dem Codewort W kombiniert, wodurch die grobe absolute Positionsmessung durch die hochauflösende Inkrementalmessung verfeinert wird und ein Gesamtabsolutwert P zur Verfügung gestellt wird. Dieser Gesamtabsolutwert P wird vorzugsweise über eine serielle Schnittstelle einer Folgeelektronik zur Verfügung gestellt.

Die Positionsmesseinrichtung ist dazu ausgelegt, möglichst viele unterschiedliche absolute Positionen innerhalb einer Messstrecke erfassen zu können. Andererseits ist sie dazu ausgelegt, dass eine zuverlässige Positionsmessung gewährleistet ist.

Eine zuverlässige Positionsmessung wird durch die Verwendung einer speziellen Codierung erreicht. Diese Codierung des Codeträgers 1 ist in Figur 2 im Detail dargestellt. Die erste Codespur 11 weist einen Pseudo-Random-Code auf. Die Codespur 11 besteht aus einer in Messrichtung X hintereinander angeordneten Folge von gleich langen Codeelementen C1 bis C16. Jedes Codeelement C1 bis C16 besteht wiederum aus zwei gleich langen in Messrichtung X unmittelbar aufeinanderfolgend angeordneten Teilbereichen C1A, C1B bis C16A, C16B, die zueinander komplementär ausgebildet sind. Komplementär bedeutet dabei, dass sie inverse Eigenschaften besitzen, also beim optischen Abtastprinzip transparent und nicht transparent bzw. bei Auflicht-Abtastung reflektierend bzw. nicht reflektierend sind.

Im dargestellten Beispiel wird davon ausgegangen, dass die Abfolge der Teilbereiche A, B eines Codeelementes C1 bis C16 dunkel -> hell die Codeinformation in Form eines Bits=0 und die Abfolge hell -> dunkel die Codeinformation in Form eines Bits=1 definiert. Somit definiert die Folge von Codeelementen C1 bis C16 der ersten Codespur 11 die Codeinformation 1000010011010111. Diese Abfolge der Codeinformationen der ersten Codespur 11 ist in Figur 2 auf der äußeren Codespur 11 aufgetragen, dabei ist jedem Codeelement C1 bis C16 in Klammer die resultierende Codeinformation zugefügt.

Die Gewinnung einer möglichst hohen Anzahl von verschiedenen absoluten Positionen erfordert die gleichzeitige Abtastung von möglichst vielen Codeelementen C1 bis C16. Diese Aufgabe wird gemäß der Erfindung dadurch gelöst, dass die gleiche Folge von Codeelementen C1 bis C16 auch in zumindest der zweiten Codespur 12 am Codeträger 1 vorhanden ist. Die Folge der Codeelemente C1 bis C16 der zweiten Codespur 12 ist gegenüber der Folge der Codeelemente C1 bis C16 der ersten Codespur 11 verschoben angeordnet. Werden von der ersten Codespur 11 beispielsweise zwei Codeelemente C zur Gewinnung eines mehrstelligen Codewortes genutzt, so ist die Folge von Codeelementen C der zweiten Codespur 12 um zwei Codeelemente C gegenüber der ersten Codespur 11 verschoben, wie in Figur 2 die am inneren Umfang eingetragene Folge von Codeinformationen der zweiten Codespur 12 zeigt. Das Codewort, welches die absolute Position eindeutig definiert, wird gemäß der Erfindung aus N Codeinformationen von aufeinanderfolgenden Codeelementen C der ersten Codespur 11 und aus K Codeinformationen von aufeinanderfolgenden Codeelementen C der zweiten Codespur 12 zusammengesetzt, mit N und K jeweils größer 1.

Die Abfolge der Codeelemente C der zweiten Codespur 12 ist gegenüber der Abfolge der Codeelemente C der ersten Codespur 11 um mehrere Codeelemente C in Messrichtung X verschoben am Codeträger 1 angeordnet. Diese Verschiebung V der Folge von Codeelementen C erfolgt in Richtung des Ortes, an der die N Codeinformationen aus der ersten Codespur 11 gewonnen werden. Durch diese Verschiebung der Folge von Codeelementen C ist es möglich, dass alle erforderlichen Codeinformationen aus einem Abtastbereich gewonnen werden können, der von der gemeinsamen Beleuchtungseinheit 21 homogen beleuchtet wird. Es wird somit auch die Ausdehnung des Abtaststrahlenbündels A quer zur Messrichtung X ausgenutzt. Eine optimale Ausnutzung kann erfolgen, wenn die Verschiebung V = N/2 + K/2 Codeelemente C beträgt.

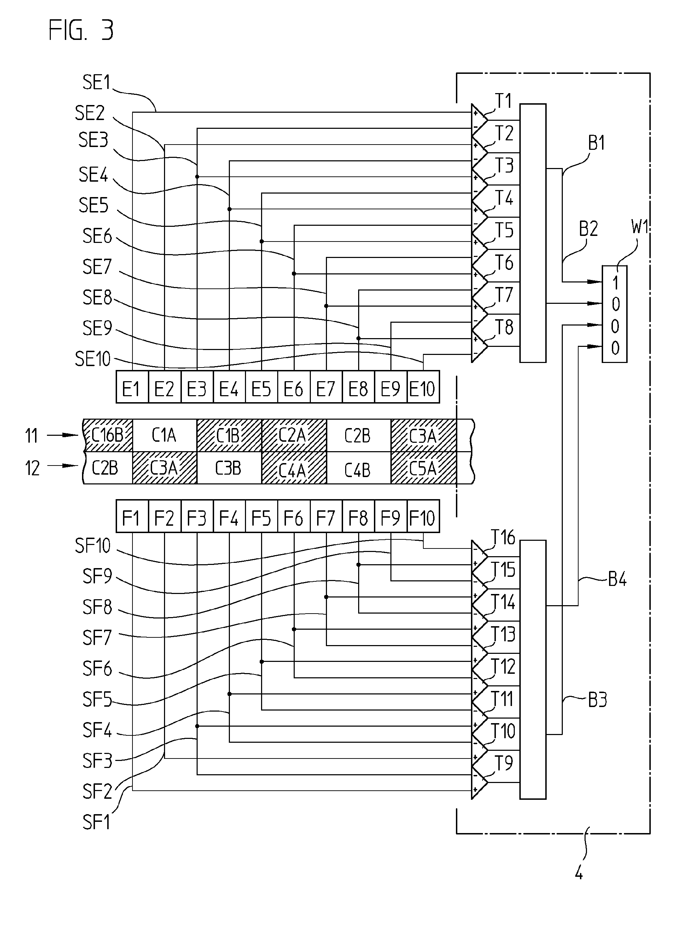

Die Detektoreinheit 3 weist somit erste Detektorelemente E zur Abtastung der ersten Codespur 11 und zweite Detektorelemente F zur Abtastung der zweiten Codespur 12 auf, wobei die ersten Detektorelemente E und die zweiten Detektorelemente F aufgrund der oben erläuterten Verschiebung V in Messrichtung X einander überlappend und senkrecht zur Messrichtung X, also in radialer Richtung, nebeneinander angeordnet sind, wie in den Figuren 1 und 3 ersichtlich ist.

Nachfolgend wird nun anhand der Figur 3 näher erläutert, wie durch Abtastung der beiden Codespuren 11, 12 über 360° des Codeträgers 1 sechszehn eindeutig unterscheidbare Codeworte W1 bis W16, also 16 absolute Positionen, zuverlässig gewonnen werden können. Dabei wird davon ausgegangen, dass sich der Codeträger 1 entgegen dem Uhrzeigersinn relativ zur Abtasteinrichtung 2 dreht.
W1: 1000
W2: 0000
W3: 0001
W4: 0010
W5: 0100
W6: 1001
W7: 0011
W8: 0110
W9: 1101
W10: 1010
W11: 0101
W12: 1011
W13: 0111
W14: 1111
W15: 1110
W16: 1100

Die weitere Erläuterung erfolgt an der ersten Abtastposition, an der das Codewort W1 generiert wird. Diese Momentanposition ist in Figur 3 dargestellt.

Die Detektorelemente E und F werden von einem Zeilensensor mit einer in Messrichtung X angeordneten Folge von Detektorelementen E1 bis E10 und F1 bis F10 gebildet. Im Beispiel soll jeweils ein Codewort W mit vier Bits gewonnen werden. Hierzu ist es erforderlich, dass jedem Teilbereich CA, CB der vier abzutastenden Codeelemente C zumindest ein Detektorelement E bzw. F eindeutig zugeordnet ist, so dass die Detektoreinheit 3 aus jedem Teilbereich CA, CB ein eindeutiges Abtastsignal S ableiten kann. Diese Abtastsignale S werden der Auswerteeinheit 4 zugeführt, welche dazu ausgelegt ist, die beiden Abtastsignale SE1 und SE3, SE2 und SE4, SE3 und SE5, SE4 und SE6, SE5 und SE7, SE6 und SE8, SE7 und SE9, SE8 und SE10, SF1 mit SF3, SF2 mit SF4, SF3 mit SF5, SF4 mit SF6, SF5 mit SF7, SF6 mit SF8, SF7 mit SF9 und SF8 mit SF10 der beiden Teilbereiche CA, CB eines Codeelementes C1 bis C16 jeweils miteinander zu vergleichen und durch diesen Vergleich für jedes Codeelement C1 bis C16 eine Codeinformation in Form eines binären Wertes bzw. eines Bits B1 bis B16 zu erzeugen. Eine Folge mehrerer Codeinformationen B1 bis B16 ergibt das Codewort W1 bis W16 welches jeweils eine absolute Position definiert. Bei einer Verschiebung der Detektoreinheit 3 gegenüber dem Codeträger 1 um die Breite bzw. Länge eines Codeelementes C1 bis C16 wird ein neues Codewort W1 bis W16 erzeugt und über den absolut zu vermessenden Messbereich wird eine Vielzahl von unterschiedlichen Codewörtern W1 bis W16 gebildet. Im Beispiel werden über eine Umdrehung von 360° 16 unterschiedliche Codewörter W1 bis W16 gebildet. Es werden jeweils die Abtastsignale S miteinander verglichen, die aus Detektoren E bzw. F abgeleitet werden, die in Messrichtung X mit einem gegenseitigen Mittenabstand entsprechend der Breite eines Teilbereichs A, B der Codeelemente C angeordnet sind.

Figur 3 zeigt eine Momentanstellung des Codeträgers 1 relativ zur Abtasteinrichtung 2. Die Detektorelemente E1 bis E10 sowie F1 bis F10 sind jeweils aufeinanderfolgend in einem Abstand mit der halben Breite eines Teilbereiches CA, CB angeordnet. Dadurch ist sichergestellt, dass in jeder Position zumindest ein Detektorelement E1 bis E10 sowie F1 bis F10 einem Teilbereich CA, CB eindeutig zugeordnet ist und nicht einen Übergang zwischen zwei Teilbereichen CA, CB abtastet. In der dargestellten Position wird der Teilbereich C1A vom Detektorelement E2 und der Teilbereich C1 B vom Detektorelement E4 abgetastet. Die Detektorelemente E2, E4 erfassen die Lichtverteilung und erzeugen in Abhängigkeit der Lichtintensität ein analoges Abtastsignal SE2, SE4 proportional zur Lichtintensität. Da die beiden Teilbereiche C1A und C1B komplementär zueinander ausgebildet sind, ist auch die Intensität der Abtastsignale SE2 und SE4 invers zueinander, die Signalpegel sind also weit voneinander beabstandet.

Dieser Signalabstand wird nun zur Erzeugung der binären Information B1 ausgenutzt, indem geprüft wird, welches der beiden Abtastsignale SE2, SE4 des Codeelementes C1 größer ist. Diese Prüfung kann durch Quotientenbildung oder durch Differenzbildung erfolgen. Am Beispiel wird die Differenzbildung eingesetzt, wozu gemäß Figur 3 als Vergleichseinrichtung T2 ein Triggerbaustein dient. Die Vergleichseinrichtung T2 erzeugt als Codeinformation B1=0, wenn SE2 kleiner SE4 und als Codeinformation B1=1, wenn SE2 größer SE4 ist. In gleicher Weise werden Codeinformationen B2, B3 und B4 in Form von binären Informationen durch Abtastung der Codeelemente C2, C3, C4 und Vergleich der analogen Abtastsignale SE6 mit SE8; SF2 mit SF4; SF6 mit SF8 der Teilbereiche C2A, C2B; C3A, C3B, C4A, C4B jeweils eines Codeelementes C2, C3, C4 durch weitere Vergleichseinrichtungen T6, T10, T14 gewonnen.

Einer ersten Abfolge der komplementär zueinander ausgebildeten Teilbereiche A, B wird also ein erster binärer Wert und einer zweiten Abfolge der komplementär zueinander ausgebildeten Teilbereiche A, B wird ein zweiter binärer Wert zugeordnet. Im Beispiel wird der Abfolge opak → transparent der Wert 0 und der Abfolge transparent → opak der Wert 1 zugeordnet.

Da die beiden Teilbereiche A und B jedes Codeelementes C1, C2, C3, C4 zueinander komplementär sind, ist der Störabstand der Abtastsignale S sehr groß. Eine Veränderung der Lichtintensität der Lichtquelle 211 beeinflusst die Abtastsignale S beider Teilbereiche A und B gleichermaßen.

Aufgrund der komplementären Ausgestaltung jeweils zweier Teilbereiche A, B eines Codeelementes C1, C2, C3, C4 müssen bei korrekter Betriebsweise der Positionsmesseinrichtung durch Abtastung dieser Teilbereiche A, B jeweils analoge Abtastsignale S erzeugt werden, deren Differenz einen vorgegebenen Wert übersteigt. Durch Beobachtung dieses Differenzwertes ist eine gute Fehlerprüfung möglich. Die Grundlage dieser Fehlerprüfung ist, dass davon ausgegangen werden kann, dass bei Unterschreiten des Differenzwertes um einen vorgegebenen Betrag die binäre Information B1, B2, B3, B4 unsicher ist und daher zu dieser binären Information B1, B2, B3, B4 ein Fehlersignal erzeugt wird.

Welche der Abtastsignale S und somit welche der Vergleichseinrichtungen T1 bis T16 in welcher Relativposition zwischen Codeträger 1 und Abtasteinrichtung 2 zur Bildung des Codewortes W herangezogen werden, kann in bekannter Weise von der Inkrementalspur 13 oder von den Abtastsignalen S der Codespuren 11, 12 selbst abgeleitet werden. Hierzu wird beispielsweise auf die EP 1 468 254 B1 verwiesen.

Nachfolgend wird nun eine weitere besonders vorteilhafte Ausgestaltung der Erfindung näher erläutert.

Bei der Positionsmesseinrichtung gemäß der EP 1 468 254 B1, von der unsere Erfindung ausgeht, ist ersichtlich, dass die Ausgangssignale von Detektoren aufgeteilt werden, so dass ein Abtastsignal jeweils zwei Vergleichseinrichtungen zugeführt werden kann. Dieses Prinzip wird auch bei dieser Erfindung übernommen. Aus Figur 3 ist ersichtlich, dass die Abtastsignale SE3 bis SE8 der Detektoren E3 bis E8 jeweils aufgeteilt werden, um die Abtastsignale SE3 bis SE8 jeweils zwei der Vergleichseinrichtungen T1 bis T8 zuführen zu können. Da es besonders vorteilhaft ist, als Abtastsignale S Ströme auszuwerten, wird zur Aufteilung der Abtastsignale S in der Praxis jeweils ein Stromspiegel verwendet. Ein Stromspiegel bildet aus einem Abtastsignal eine Kopie dieses Abtastsignals. Stromspiegel sind aber relativ aufwendig herstellbar und benötigen in einem Halbleitersubstrat relativ viel Platz.

Mit der erfindungsgemäßen Anordnung ist es nun möglich, die Anzahl der benötigten Stromspiegel zu verringern. Dabei wird ausgenutzt, dass die Folge von Codeelementen C1 bis C16 in der ersten Codespur 11 sowie die gleiche Folge von Codeelementen C1 bis C16 auch in der zweiten Codespur 12 vorhanden ist. Eine Aufteilung der Abtastsignale SE9 und SE10 der Detektoren E9 und E10 kann damit vermieden werden. Der Detektor E9 erzeugt nun das gleiche Abtastsignal SE9 wie der Detektor F1 und der Detektor E10 erzeugt das gleiche Abtastsignal SE10 wie der Detektor F2. Durch die redundante Erzeugung gleicher Abtastsignale SE9 und SF1 sowie SE10 und SF2, nämlich einerseits aus der ersten Codespur 11 und zusätzlich aus der zweiten Codespur 12, erübrigt sich eine Aufteilung mittels eines Stromspiegels. Die Einsparung eines Stromspiegels wird zwar durch das Erfordernis zumindest eines zusätzlichen Detektors erkauft, was aber oft einfacher und platzsparender realisierbar ist.

Gemäß dieser besonders vorteilhaften Ausbildung der Erfindung ist demnach zumindest einem Codeelement C3 der Folge in der zweiten Codespur 12 ein Detektor F2 zur Bildung eines redundanten Abtastsignals SF2 zugeordnet, dem auch in der ersten Codespur 11 ein Detektor E10 zur Bildung eines Abtastsignals SE10 zugeordnet ist. Die aus der ersten Codespur 11 und der zweiten Codespur 12 gewonnenen redundanten Abtastsignale SE10, SF2 sind der Auswerteeinheit 4 zugeführt, um das aus der ersten Codespur 11 abgeleitete redundante Abtastsignal SE10 mit einem Abtastsignal SE8 der ersten Codespur 11 und das aus der zweiten Codespur 12 abgeleitete redundante Abtastsignal SF2 mit einem Abtastsignal SF4 der zweiten Codespur 12 zu vergleichen. Das aus der ersten Codespur 11 abgeleitete redundante Abtastsignal SE10 wird also mit einem Abtastsignal SE8 der ersten Codespur 11 verglichen, das aus einem Detektor E8 gewonnen wird, der um die Länge eines Teilbereichs C1A, C16A - C1B, C16B versetzt angeordnet ist. Für die Vergleichseinrichtung T8 ist das Abtastsignal SE8 das Taktsignal und das Abtastsignal SE10 das Gegentaktsignal. Das aus der zweiten Codespur 12 abgeleitete redundante Abtastsignal SF2 wird mit einem Abtastsignal SF4 der zweiten Codespur 12 verglichen, das aus einem Detektor F4 gewonnen wird, der um die Länge eines Teilbereichs C1A, C16A - C1B, C16B versetzt angeordnet ist. Für die Vergleichseinrichtung T10 ist das zum Abtastsignal SE10 redundante Abtastsignal SF2 nun das Taktsignal und das Abtastsignal SF4 das Gegentaktsignal.

Figur 4 zeigt eine weitere Ausgestaltung einer Detektoreinheit 30 zur Abtastung einer Inkrementalspur und zweier Codespuren. Es wird wieder davon ausgegangen, dass die abzutastende Inkrementalspur auf einem Radius RI angeordnet ist, der größer ist als der Radius RN und RK der beiden Codespuren. Die Anordnung der Inkrementalspur auf dem äußeren Umfang hat den Vorteil, dass eine möglichst hohe Anzahl an Teilungsperioden über den Umfang angeordnet werden kann. Zur Erzeugung eines Codewortes mit 7 Bits weist die Detektoreinheit 30 beispielsweise eine erste Reihe von Detektoren E und eine zweite Reihe von Detektoren F auf. Die Detektoren E sind wiederum einer ersten Codespur und die Detektoren F einer zweiten Codespur eines Codeträgers zugeordnet. Zur Ausnutzung des homogenen Abtaststrahlenbündels A werden mit der ersten Reihe von Detektoren E mehr Bits erzeugt als mit der zweiten Reihe von Detektoren F. Im Beispiel dienen die Detektoren E zur Erzeugung von 4 Bits und die Detektoren F zur Erzeugung von 3 Bits.

## Patentansprüche

1. Positionsmesseinrichtung mit
- einem Codeträger (1) auf dem eine erste Codespur (11) und eine parallel dazu verlaufende zweite Codespur (12) vorgesehen ist, und die erste Codespur (11) und die zweite Codespur (12) jeweils die gleiche Folge von Codeelementen (C1 - C16) aufweisen, wobei jedes Codeelement (C1 - C16) aus zwei Teilbereichen (C1A, C1B - C16A, C16B) mit zueinander komplementären Eigenschaften besteht, die in Messrichtung X aufeinanderfolgend angeordnet sind;
- einer Abtasteinrichtung (2) mit mehreren Detektoren (E1 - E10; F1 - F10) zur Abtastung der Codeelemente (C1 - C16) und zur Bildung zumindest eines Abtastsignals (SE1 - SE10; SF1 - SF10) innerhalb jeweils eines der Teilbereiche (C1A, C1B - C16A - C16B) der Codeelemente (C1 - C16);
- einer Auswerteeinheit (4), ausgebildet zur Erzeugung von Codeinformationen (B1-B4) aus den Abtastsignalen (SE1 - SE10; SF1 - SF10) und zur Bildung eines Codewortes (W1 -W16) aus den Codeinformationen (B1 - B4), wobei die Auswerteeinheit (4) das Codewort (W1 - W16) bildet, welches die absolute Position in Messrichtung (X) eindeutig definiert, indem das Codewort (W1 - W16) aus N Codeinformationen (B1, B2) von aufeinanderfolgenden Codeelementen (C1 - C16) der ersten Codespur (11) und aus K Codeinformationen (B3, B4) von aufeinanderfolgenden Codeelementen (C1 - C16) der zweiten Codespur (12) zusammengesetzt wird, mit N und K größer 1.

2. Positionsmesseinrichtung nach Anspruch 1, **dadurch gekennzeichnet, dass** die zwei Teilbereiche (C1A, C1B - C16A, C16B) eines Codeelementes (C1 - C16) zueinander komplementäre optische Eigenschaften aufweisen, und dass die Codespuren (11, 12) von einem gemeinsamen Abtaststrahlenbündel (A) beleuchtet werden.

3. Positionsmesseinrichtung nach einem der vorhergehenden Ansprüche, **dadurch gekennzeichnet, dass** die Abfolge der Codeelemente (C1, C16) der zweiten Codespur (12) gegenüber der Abfolge der Codeelemente (C1, C16) der ersten Codespur (11) in Messrichtung X derart verschoben am Codeträger (1) angeordnet ist, dass sich die das Codewort (W1 - W16) bildenden Codeelemente (C1 - C16) der ersten Codespur (11) und der zweiten Codespur (12) zumindest teilweise überlappen.

4. Positionsmesseinrichtung nach Anspruch 3, **dadurch gekennzeichnet, dass** die Verschiebung V = N/2 + K/2 Codeelemente (C1 - C16) beträgt.

5. Positionsmesseinrichtung nach einem der vorhergehenden Ansprüche, **dadurch gekennzeichnet, dass** die Auswerteeinheit (4) Vergleichseinrichtungen (T1 - T16) umfasst, denen je zwei Abtastsignale (SE1 - SE10; SF1 - SF10) von Detektoren (E1 - E10; F1 - F10) zugeführt sind, die in Messrichtung X den gleichen Abstand aufweisen wie zwei in Messrichtung X aufeinanderfolgend angeordnete Teilbereiche (C1A - C16A; C1B - C16B), und dass die Vergleichseinrichtungen (T1 - T16) jeweils dazu ausgebildet sind durch Vergleich der zugeführten Abtastsignale SE1 - SE10; SF1 - SF10) die Codeinformation (B1 - B4) zu generieren.

6. Positionsmesseinrichtung nach einem der vorhergehenden Ansprüche, **dadurch gekennzeichnet, dass** zumindest einem Codeelement (C3) der Folge in der zweiten Codespur (12) ein Detektor (F2) zur Bildung eines redundanten Abtastsignals (SF2) zugeordnet ist, dem auch in der ersten Codespur (11) ein Detektor (E10) zur Bildung eines Abtastsignals (SE10) zugeordnet ist.

7. Positionsmesseinrichtung nach Anspruch 6, **dadurch gekennzeichnet, dass** die redundanten Abtastsignale (SE10, SF2) der ersten Codespur (11) und der zweiten Codespur (12) der Auswerteeinheit (4) zugeführt sind, um das aus der ersten Codespur (11) abgeleitete redundante Abtastsignal (SE10) mit einem Abtastsignal (SE8) der ersten Codespur (11) und das aus der zweiten Codespur (12) abgeleitete redundante Abtastsignal (SF2) mit einem Abtastsignal (SF4) der zweiten Codespur (12) zu vergleichen.

8. Positionsmesseinrichtung nach einem der vorhergehenden Ansprüche, **dadurch gekennzeichnet, dass** die Detektoren (E1 - E10; F1 - F10) in Messrichtung X in Abständen entsprechend der halben Länge eines Teilbereiches (C1A- C16A, C1B - C16B) angeordnet sind.

9. Positionsmesseinrichtung nach einem der vorhergehenden Ansprüche, **dadurch gekennzeichnet, dass** parallel zu den mehreren Codespuren (11, 12) eine Inkrementalspur (13) angeordnet ist.

10. Positionsmesseinrichtung nach einem der vorhergehenden Ansprüche, **dadurch gekennzeichnet, dass** die Codespuren (11, 12) kreisringförmig angeordnet sind und die Sektorbreite der Codeelemente (C1 - C16) der mehreren Codespuren (11, 12) jeweils gleich ist.

11. Positionsmesseinrichtung nach den Ansprüchen 9 und 10, **dadurch gekennzeichnet, dass** K kleiner N, und dass die Inkrementalspur (13) auf einem Radius RI, die erste Codespur (11) auf einem Radius RN und die zweite Codespur (12) auf einem Radius RK angeordnet ist, mit RI>RN>RK.

## Claims

1. Position measuring device having
- a code carrier (1), on which a first code track (11) and a second code track (12) running parallel to the latter are provided, and the first code track (11) and the second code track (12) each have the same sequence of code elements (C1-C16),
each code element (C1-C16) consisting of two sections (C1A, C1B - C16A, C16B) which have properties complementary to one another and are arranged in succession in the measurement direction X;
- a scanning device (2) having a plurality of detectors (E1-E10; F1-F10) for scanning the code elements (C1-C16) and for forming at least one scanning signal (SE1-SE10; SF1-SF10) inside a respective one of the sections (C1A, C1B - C16A, C16B) of the code elements (C1-C16);
- an evaluation unit (4) designed to generate code information (B1-B4) from the scanning signals (SE1-SE10; SF1-SF10) and to form a code word (W1-W16) from the code information (B1-B4),
the evaluation unit (4) forming the code word (W1-W16) which unambiguously defines the absolute position in the measurement direction (X) by virtue of the code word (W1-W16) being composed of N items of code information (B1, B2) from successive code elements (C1-C16) in the first code track (11) and of K items of code information (B3, B4) from successive code elements (C1-C16) in the second code track (12), where N and K are greater than 1.

2. Position measuring device according to Claim 1, **characterized in that** the two sections (C1A, C1B - C16A, C16B) of a code element (C1-C16) have optical properties complementary to one another, and **in that** the code tracks (11, 12) are illuminated by a common scanning beam (A).

3. Position measuring device according to one of the preceding claims, **characterized in that** the sequence of code elements (C1, C16) in the second code track (12) is arranged on the code carrier (1) in a manner shifted in comparison with the sequence of code elements (C1, C16) in the first code track (11) in the measurement direction X in such a manner that the code elements (C1-C16) forming the code word (W1-W16) in the first code track (11) and in the second code track (12) at least partially overlap.

4. Position measuring device according to Claim 3, **characterized in that** the shift is V = N/2 + K/2 code elements (C1-C16).

5. Position measuring device according to one of the preceding claims, **characterized in that** the evaluation unit (4) comprises comparison devices (T1-T16), to each of which two scanning signals (SE1-SE10; SF1-SF10) from detectors (E1-E10; F1-F10) are supplied, which detectors are at the same distance in the measurement direction X as two sections (C1A-C16A; C1B-C16B) arranged in succession in the measurement direction X, and **in that** the comparison devices (T1-T16) are each designed to generate the code information (B1-B4) by comparing the supplied scanning signals (SE1-SE10; SF1-SF10).

6. Position measuring device according to one of the preceding claims, **characterized in that** a detector (F2) for forming a redundant scanning signal (SF2) is assigned to at least one code element (C3) in the sequence in the second code track (12), which code element is also assigned a detector (E10) for forming a scanning signal (SE10) in the first code track (11).

7. Position measuring device according to Claim 6, **characterized in that** the redundant scanning signals (SE10, SF2) of the first code track (11) and of the second code track (12) are supplied to the evaluation unit (4) in order to compare the redundant scanning signal (SE10) derived from the first code track (11) with a scanning signal (SE8) of the first code track (11) and to compare the redundant scanning signal (SF2) derived from the second code track (12) with a scanning signal (SF4) of the second code track (12).

8. Position measuring device according to one of the preceding claims, **characterized in that** the detectors (E1-E10; F1-F10) are arranged in the measurement direction X at distances corresponding to half the length of a section (C1A-C16A, C1B-C16B).

9. Position measuring device according to one of the preceding claims, **characterized in that** an incremental track (13) is arranged parallel to the plurality of code tracks (11, 12).

10. Position measuring device according to one of the preceding claims, **characterized in that** the code tracks (11, 12) are arranged in an annular manner and the sector width of the code elements (C1-C16) in the plurality of code tracks (11, 12) is the same in each case.

11. Position measuring device according to Claims 9 and 10, **characterized in that** K is less than N, and **in that** the incremental track (13) is arranged on a radius RI, the first code track (11) is arranged on a radius RN and the second code track (12) is arranged on a radius RK, where RI>RN>RK.

## Revendications

1. Dispositif de mesure de position comportant
- un support de code (1) sur lequel sont disposées une première piste de code (11) et une seconde piste de code (12) s'étendant parallèlement à celle-ci, et la première piste de code (11) et la seconde piste de code (12) présentent respectivement la même séquence d'éléments de code (C1 - C16),
dans lequel chaque élément de code (C1 - C16) est constitué de deux sections (C1A, C1B - C16A, C16B) ayant des propriétés complémentaires les unes des autres, qui sont disposées dans la direction de mesure X l'une à la suite de l'autre ;
- un dispositif de balayage (2) comportant une pluralité de détecteur (E1 - E10 ; F1 - F10) destinés à balayer les éléments de code (C1 - C16) et à former au moins un signal de balayage (SE1 - SE10 ; SF1 - SF10) à l'intérieur de l'une, respective, des sections (C1A, C1B - C16A, C16B) des éléments de code (C1 - C16) ;
- une unité d'évaluation (4), conçue pour générer des informations de code (B1 - B4) à partir des signaux de balayage (SE1 - SE10 ; SF1 - SF10) et à former un mot de code (W1 - W16) à partir des informations de code (B1 - B4), dans lequel
l'unité d'évaluation (4) forme le mot de code (W1 - W16) qui définit de manière unique la position absolue dans la direction de mesure (X), en faisant en sorte que le mot de code (W1 - W16) soit composé de N informations de code (B1, B2) d'éléments de code (C1 - C16) consécutifs de la première piste de code (11) et de K informations de code (B3, B4) d'éléments de code (C1 - C16) consécutifs de la seconde piste de code (12), N et K étant supérieurs à 1.

2. Dispositif de mesure de position selon la revendication 1, **caractérisé en ce que** les deux sections (C1A, C1B - C16A, C16B) d'un élément de code (C1 - C16) présentent des propriétés optiques mutuellement complémentaires et **en ce que** les pistes de code (11, 12) sont éclairées par un faisceau de rayons de balayage commun (A).

3. Dispositif de mesure de position selon l'une quelconque des revendications précédentes, caractérisé en cc que la suite des éléments de code (C1 - C16) de la seconde piste de code (12) est disposée de manière décalée par rapport à la suite des éléments de code (C1 - C16) de la première piste de code (11) dans la direction de mesure X sur le support de code (1) de manière à ce que les éléments de code (C1 - C16) formant le mot de code (W1 - W16) de la première piste de code (11) et de la seconde piste de code (12) se chevauchent au moins partiellement.

4. Dispositif de mesure de position selon la revendication 3, **caractérisé en ce que** le décalage est de V = N/2 + K/2 éléments de code (C1 - C16).

5. Dispositif de mesure de position selon l'une quelconque des revendications précédentes, **caractérisé en ce que** l'unité d'évaluation (4) comprend des dispositifs de comparaison (T1 - T16) à chacun desquels deux signaux de balayage (SE1 - SE10 ; SF1 - SF10) sont fournis par des détecteurs (E1 - E10 ; F1 - F10) qui présentent la même distance dans la direction de mesure X que deux sections (C1A - C16A ; C1B - C16B) disposées consécutivement dans la direction de mesure X, et **en ce que** les dispositifs de comparaison (T1 - T16) sont respectivement conçus pour générer l'information de code (B1 - B4) par comparaison des signaux de balayage fournis (SE1 - SE10 ; SF1 - SF10).

6. Dispositif de mesure de position selon l'une quelconque des revendications précédentes, **caractérisé en ce qu'**un détecteur (F2) destiné à former un signal de balayage redondant (SF2) est associé à au moins un élément de code (C3) de la séquence dans la seconde piste de code (12), auquel est également associé un détecteur (E10) destiné à former un signal de balayage (SE10) dans la première piste de code (11).

7. Dispositif de mesure de position selon la revendication 6, **caractérisé en ce que** les signaux de balayage redondants (SE10, SF2) de la première piste de code (11) et de la seconde piste de code (12) sont fournis à l'unité d'évaluation (4) afin de comparer le signal de balayage redondant (SE10) dérivé de la première piste de code (11) à un signal de balayage (SE8) de la première piste de code (11) et de comparer le signal de balayage redondant (SF2) dérivé de la seconde piste de code (12) à un signal de balayage (SF4) de la seconde piste de code (12).

8. Dispositif de mesure de position selon l'une quelconque des revendications précédentes, caractérisé en que les détecteurs (E1 - E10 ; F1 - F10) sont disposés dans la direction de mesure X à des distances correspondant à la moitié de la longueur d'une section (C1A, C1B - C16A, C15B).

9. Dispositif de mesure de position selon l'une quelconque des revendications précédentes, **caractérisé en ce qu'**une piste incrémentale (13) est disposée parallèlement aux multiples pistes de code (11, 12).

10. Dispositif de mesure de position selon l'une quelconque des revendications précédentes, **caractérisé en ce que** les pistes de code (11, 12) sont disposées selon la forme d'un cercle et **en ce que** la largeur de secteur des éléments de code (C1 - C16) est respectivement égale à celle des multiples pistes de code (11, 12).

11. Dispositif de mesure de position selon les revendications 9 et 10, **caractérisé en ce que** K est inférieur à N et **en ce que** la piste incrémentale (13) est disposée sur un rayon RI, **en ce que** la première piste de code (11) est disposée sur un rayon RN et **en ce que** la seconde piste de code (12) est disposée sur un rayon RK, avec RI>RN>RK.
